# EUROPÄISCHE PATENTANMELDUNG

(11) **EP 1 375 293 A2**
(43) Veröffentlichungstag der Anmeldung: **02.01.2004**
(21) Anmeldenummer: 03013266.6
(22) Anmeldetag: 12.06.2003
(51) Int. Cl.: B62D 1/10

(54) **Elastisches Kopplungsbauteil, Anordnung mit zwei im Betrieb Schwingungen und/oder Vibrationen ausgesetzten Bauteilen und Träger zum Halten eines Bauteils an einem in Betrieb Schwingungen und/oder Vibrationen ausgesetzten Bauteil**

(30) Priorität: 12.06.2002 DE 10226092
(71) Anmelder: WOCO AVS GmbH, 63628 Bad Soden-Salmünster (DE)
(72) Erfinder: Schneider, Joachim, 63628 Bad Soden-Salmünster (DE); Weissbäcker, Jürgen, 63628 Bad Soden-Salmünster (DE); Schleinitz, Uwe, 06896 Nudersdorf (DE); Protzmann, Sabine, 63636 Brachttal (DE)
(74) Vertreter: Weber-Bruls, Dorothée, Dr.

(57) **Zusammenfassung**

Bei einem elastischem Kopplungsbauteil zum Verbinden zweier im Betrieb Schwingungen und/oder Vibrationen ausgesetzter Bauteile insbesondere eines Kraftfahrzeuges, vorzugsweise zum Bilden eines Lenkradskelettteils und eines Massetilgers, wobei das Kopplungsbauteil einen elastischen Grundkörper und eine jeweils einem Bauteil zuzuordnende mechanische Befestigungseinrichtung umfaßt, die mit den Grundkörpern fest verbunden ist.

## Beschreibung

Die Erfindung betrifft ein elastisches Kopplungsbauteil oder eine Einzelfeder zum Verbinden zweier Bauteile eines Schwingungssystems, insbesondere eines Kraftfahrzeugs, eine Anordnung mit zwei Bauteilen eines Schwingungssystems insbesondere eines Kraftfahrzeugs und einen Träger zum Halten eines Bauteils an einem Schwingungen und/oder Vibrationen ausgesetzten Bauteil insbesondere eines Kraftfahrzeugs.

Es ist insbesondere bei Kraftfahrzeugen bekannt, zum Tilgen und Dämpfen von Störschwingungen und Vibrationen Bauteile federnd bzw. abfedernd elastisch miteinander zu verbinden. Bei Lenkradanordnungen ist beispielsweise eine Tilgermasse an einem Lenkradskelett elastisch gekoppelt.

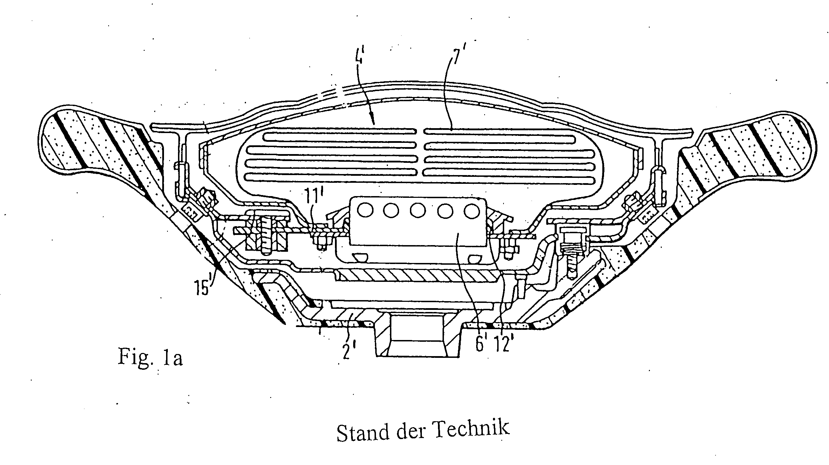

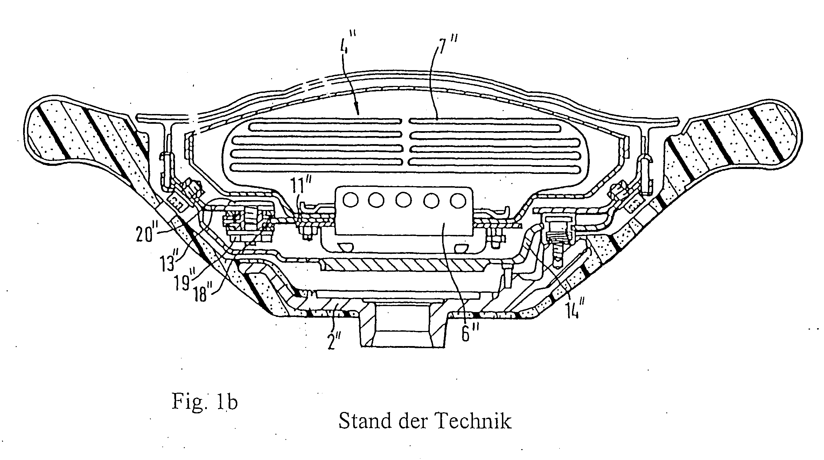

Gemäß der DE 199 13 120 werden bei einer derartigen Lenkradanordnung auftretende Störvibrationen dadurch getilgt, daß ein Gasgenerator 6' eines Airbagmoduls 4', 7', 4", 7" als Tilgermasse eingesetzt wird. In Fig. 1a der Lenkradanordnung für Kraftfahrzeuge gemäß diesem Stand der Technik ist der Gasgenerator 6' über einen Federring 12' aus einem Elastomer mit einem Trägerblech 11' verbunden. Das Trägerblech 11' ist seinerseits über Schraubenverbindungen 15' mit dem Lenkradskelett 2' fest verbunden. Der Federring 12' wird zu seiner Befestigung an der Trägerplatte 11' anvulkanisiert. In Fig. 1b ist der Gasgenerator 6" fest mit dem Trägerblech 11" verbunden, das über drei Elastomer-Einknüpflager 18" und eine Bolzenverschraubung 19", 20" federschwingfähig an die Bleche 13", 14" des Lenkradskeletts 2" angebracht ist. Beide Kopplungsausführungen des Gasgenerators 6', 6" an das Lenkradskelett 2', 2" sind hinsichtlich ihrer aufwendigen Montageerfordernisse bzw. der großen Anzahl von separaten Kopplungsbauteile nachteilig. Zum Anvulkanisieren des Federrings 12' müssen vorbereitende Haftvermittlungsmaßnahmen an dem Trägerblech 11' und dem Federring 12' vorgenommen werden. Diese beinhalten eine Vorbehandlung der Haftflächen sowie ein Entfetten und Aufbringen einer chemischen Lösung sowie den Anvulkanisierungsvorgang selbst. Zudem weist die Anvulkanisierungsbefestigung insofern Nachteile auf, als dort leicht Verfestigungen auftreten können, die bei einer stärkeren Belastung ein ungewolltes Lösen des Federrings 12' von dem Trägerblech 11' verursachen können. Bei der in Fig. 1b des Standes der Technik dargestellten Kopplungsanordnung aus dem elastischen Einknüpflager 18" und der davon räumlich getrennten Bolzenverschraubung 19", 20" ist eine Montage äußerst aufwendig, weil viele Einzelteile genau positioniert werden müssen und das gegenseitige Wechselspiel zwischen der Bolzenverschraubung 19", 20" und dem Elastomer-Einknüpflager 18" stets beachtet werden muß.

Aus der DE 299 02 033 ist bekannt, einen Montagezylinder aus einem elastischen Werkstoff zwischen einem Gasgeneratorflansch und dem Generatorträger anzubringen, um die unerwünschten Vibrationen an dem Gasgenerator zu dämpfen. Der Montagezylinder wird durch Anvulkanisieren an die entsprechenden Bauteile befestigt. Auch bei dieser elastischen Kopplung sind die oben geschilderten Nachteile des Anvulkanisierungsverfahrens gegeben.

Aus der US 2001/0048216 ist ein Airbagmodul bekannt, bei dem eine Trägerplatte mit einer Öffnung für den gefalteten Airbag vorgesehen ist. Ein ringförmiges Kopplungsbauteil aus einem elastischen Material ist an dem Öffnungsrand anvulkanisiert. Der Gasgenerator ist an die Trägerplatte mittels einer Bajonettverriegelung befestigt, wobei das elastische, ringförmige Kopplungsbauteil zwischen der Trägerplatte und dem Gasgenerator liegt. Diese Kopplungsanordnung fordert einerseits das nachteilige Anvulkanisierungsverfahren und andererseits eine sehr aufwendige Bajonettverschlußeinrichtung, bei der sowohl der Gasgenerator als auch die Trägerplatte zur Realisierung des Bajonettverschlusses gestaltet sein müssen. Dies führt zu sehr hohen Herstellungskosten sowohl des Gasgenerators als auch der Trägerplatte.

Die DE 39 25 761 offenbart einen Airbagmodul mit einer Vibrationsunterdrückungsvorrichtung zwischen dem Airbagmodul und dem Lenkradskelett. Zur Vibrationsunterdrückung wird der Gasgenerator über ein elastisches Kopplungsmittel mit dem Lenkradkörper verbunden. Das elastische Kopplungsmittel umfaßt eine Niete, deren beide Enden an dem Gehäuse des Gasgenerators bzw. an einem Lenkradteil eingesetzt sind. Die Niete wird unter Ausbildung eines Zwischenraums von einem rohrförmigen elastischen Teil umgeben, wobei das untere Ende des elastischen Kopplungsteils zum Abstützen mit einer Unterlegscheibe verbunden ist, die sich an dem Lenkradteil abstützt. Auch bei dieser Kopplungsanordnung sind separate Bauteile notwendig, die ein aufwendiges Montageverfahren nach sich ziehen.

Schließlich ist aus der DE 298 16 933 ein Airbagmodul bekannt, bei dem zwischen dem Airbaggehäuse und dem Gasgenerator ein Gummiring vorgesehen ist. Für die Kopplung des Gummirings an dem Gasgenerator weist dieser einen Schlitz auf, in dem ein Halteflansch aufgenommen ist. Ein weiterer Flansch des Airbaggehäuses ist derart bezüglich dem Halteflansch des Gasgenerators angeordnet, daß der.Gummiring zusammengedrückt und somit in Position gehalten wird. Diese Kopplungsanordnung ist insofern nachteilig, als ein genaues Montagemaß notwendig ist, damit die Andrückkraft des Flansches des Airbagmodulgehäuses stark genug ist, um ein Wandern des Gummirings zu verhindern, jedoch nicht zu groß wird, so daß die Dämpfungseigenschaft des Gummirings nicht beeinträchtigt wird.

Es ist Aufgabe der Erfindung ein Kopplungsbauteil zu schaffen, das eine schnelle, einfache, insbesondere vulkanisierungsfreie und flexible Montage der Schwingungsbauteile ermöglicht, wobei die Dämpfungseigenschaften des Kopplungsbauteils nicht beeinträchtigt werden.

Diese Aufgabe wird durch Anspruch 1 gelöst. Die Erfindung sieht ein elastisches Kopplungsbauteil vor, das einen elastischen Grundkörper und eine jeweils einem Bauteil zuzuordnende mechanische Befestigungseinrichtung umfaßt. Die mechanischen Befestigungseinrichtungen sind an dem Grundkörper fest angebracht. Das erfindungsgemäße elastische Kopplungsbauteil verbindet zwei Schwingungen und/oder Vibrationen ausgesetzte Bauteile. Die Kopplungsbauteile der Erfindung erweisen sich als besonders vorteilhaft bei Kraftfahrzeugbauteilen, beispielsweise bei einer Tilgermasse, die mit einem Lenkradskelettteil zu verbinden ist.

Die erfindungsgemäßen Kopplungsbauteile können auch als Verbindungsstücke zur Schwingungsentkopplung verwendet werden, um Entkopplungseinheiten, wie die Entkopplung des Kühlers oder die Entkopplung der Schaltung, zu schaffen.

Mit dem erfindungsgemäßen Kopplungsbauteil können Schwingungssysteme realisiert werden, bei deren konstruktiven Auslegung ein hohes Maß an Flexibilität besteht, um die Koppelung der zu verbindenden Teile zu realisieren. Insbesondere sind keine vorbereitenden Verfahrensschritte für das Anvulkanisieren eines elastomeren Kopplungsbauteils an die Bauteile notwendig. Femer ist die Verbindung des elastischen Bauteils über eine mechanische Befestigungseinrichtung wesentlich zuverlässiger als die durch Vulkanisieren geschaffene Verbindung.

Außerdem ist das erfindungsgemäße elastische Kopplungsbauteil hinsichtlich des Montageaufwands und der Herstellungskosten wesentlich ökonomischer als die herkömmlichen Kopplungsmaßnahmen. Insbesondere ist das elastische Kopplungsbauteil oder die Einzelfeder der Erfindung für eine Einzelteilherstellung und damit für eine Herstellung in hohen Stückzahlen geeignet. Das erfindungsgemäße Kopplungsbauteil stellt ferner eine Trennung der üblicherweise mit den zu verbindenden Bauteilen einstückig ausgebildeten Kopplungselemente dar. Zum anderen ist das separate Kopplungsbauteil eine Bauteileinheit, für deren Montage nur noch wenige, einfache Arbeitsschritte erforderlich sind.

Ein weiterer Vorteil des erfindungsgemäßen Kopplungsbauteils kann darin bestehen, daß die mechanische Befestigungseinrichtung lösbar an den jeweiligen Bauteilen befestigt wird. Im Gegensatz zum Anvulkanisieren eines elastischen Grundkörpers an das jeweilige Bauteil ist vorzugsweise das Kopplungsbauteil der Erfindung zur lösbaren Befestigung an das entsprechende Bauteil ausgelegt. Auf diese Weise kann eine Demontage und eine erneute Montage der jeweiligen Bauteile realisiert werden, was zudem die Reparaturkosten oder Kosten für das Ersetzen von Einzelbauteilen des Schwingungssystems reduziert. Bei den herkömmlichen einstückig mit den Bauteilen realisierten Kopplungsabschnitten ist beim Versagen der elastischen Kopplung grundsätzlich das gesamte Bauteil auszutauschen.

Zusätzlich kann das erfindungsgemäße Kopplungsbauteil vorsehen, daß die Befestigungseinrichtung für einen Formschluß und/oder einen Reib- oder Kraftschluß ausgelegt ist. Diese unterschiedlichen mechanischen Verbindungstypen ermöglichen eine Befestigung des elastischen Grundkörpers an das jeweilige Bauteil und können jeden chemischen Kopplungsprozeß, wie das Anvulkanisieren, ersetzen.

Vorzugsweise ist die Befestigungseinrichtung an wenigstens einem freien Ende des Kopplungsbauteils oder zumindest einem der freien Ende benachbart fest angebracht. Diese Anordnung der Befestigungseinrichtung erleichtert eine einfache Montage des Kopplungsbauteils an das jeweilige zu koppelnde Bauteil. Zudem kann durch die Anordnung in der Nähe des freien Endes des Kopplungsbauteils der gesamte elastische Grundkörper den Schwingungen und/oder Vibrationen ausgesetzt werden, was zu einer optimalen Ausnutzung der Dämpfungseigenschaften des Kopplungsbauteils führt.

Die mechanische Befestigungseinrichtung kann durch ein Verniet-, Einknüpf-, Verrast-, Verklemm-, Verclipselement oder dergleichen realisiert sein.

In einer ersten bevorzugten Ausführung des erfindungsgemäßen Kopplungsbauteils ist die Befestigungseinrichtung durch ein Nietelement gebildet. Das Nietelement schafft eine sichere formschlüssige Kopplung des elastischen Grundkörpers an das jeweilige Bauteil. Zur Ausführung des Nietelements können jegliche bekannte Nietelementbauteile herangezogen werden. Vorzugsweise ist das Nietelement an dem elastischen Grundkörper angeklebt oder anvulkanisiert. Dieser Befestigungsvorgang kann in einem separaten Herstellungsprozeß für das Kopplungsbauteil vor dessen Endmontage durchgeführt werden. Allerdings ist es auch vorstellbar, zur Erleichterung der Montage das Nietelement erst dann an dem elastischen Grundkörper anzubringen, wenn die genaue Position des elastischen Grundkörpers bezüglich dem zu koppelnden Bauteil feststeht. Auf diese Weise kann eine noch höhere Flexibilität bei der Montage des Schwingungen ausgesetzten Bauteils realisiert werden.

Ein vorteilhaftes Nietelement ist aus einem Metall, insbesondere aus Aluminium, gebildet. Grundsätzlich ist das Nietelement so auszulegen, daß es die durch den Betrieb wirkenden Belastungen standhält.

Eine alternative Befestigungseinrichtung für das erfindungsgemäße Kopplungsbauteil kann darin bestehen, am Ende des elastischen Grundkörpers ein Verclipselement vorzusehen. Das Verclipselement ist dazu ausgelegt, mit der zugeordneten Bohrung in dem jeweiligen Schwingungsbauteil verrastend zusammenzuwirken. Die Verclipselemente können aus Kunststoff sein, wodurch eine einfache Befestigung an den elastischen Grundkörpern beispielsweise durch Kleben möglich ist.

In einer weiteren bevorzugten Ausführung des erfindungsgemäßen Kopplungsbauteils ist die Befestigungseinrichtung durch einen Eingreifabschnitt am Grundkörper ausgebildet. Dieser Eingreifabschnitt dient dazu, mit einem entsprechend an dem jeweiligen Bauteil angebrachten Klemmgreifer oder Schnapper zusammenzuwirken. Der Klemmgreifer oder Schnapper ist derart ausgelegt, daß er in den Eingreifabschnitt eingreifen kann. Der Eingreifabschnitt kann als zusätzliches Bauteil an dem elastischen Grundkörper fest angebracht sein oder als einstükkig mit dem Grundkörper ausgebildeter, geformter, elastischer Abschnitt gebildet sein. Selbstverständlich ist der Eingreifabschnitt derart stark auszulegen, daß die im Betrieb bestehenden Belastungen an dem Verbindungsbereich zwischen dem Eingreifabschnitt und dem Klemmgreifer standgehalten werden. Ferner ist vorstellbar, den Eingreifabschnitt am jeweiligen zu koppelnden Bauteil auszubilden und den Klemmgreifer oder Schnapper an dem Grundkörper des Kopplungsbauteils zu befestigen. Der Klemmgreifer oder Schnapper ist vorzugsweise aus Metall, insbesondere Aluminium.

Vorzugsweise weist der Grundkörper einen hülsenartigen Aufbau auf. Dieser hülsenartige Aufbau ist vor allem dann zu wählen, wenn Belastungen auf das Kopplungsbauteil längs des hülsenartigen Aufbaus vorliegen oder Torsionskräfte auf das Kopplungsbauteil wirken. Bei einer anderen bevorzugten Ausführung des elastischen Grundkörpers ist dieser massiv gebildet. Dies ist bei wechselnden Zug- und Druckbeanspruchungen von Vorteil. Ferner kann diese Art von Grundkörper vorteilhaft eingesetzt werden, wenn nur geringe Abstände zwischen den beiden zu koppelnden Bauteilen vorliegen.

In einer weiteren bevorzugten Ausführung des erfindungsgemäßen Kopplungsbauteils ist die Befestigungseinrichtung so ausgelegt, daß es mit dem jeweiligen Bauteil einknüpfend gekoppelt werden kann. Vorzugsweise weist das erfindungsgemäße Kopplungsbauteil einen in den Grundkörper eingebrachten Einschnitt auf, in dem ein männlicher Einknüpfabschnitt des zu koppelnden Bauteils eingreifen kann. Darüberhinaus ist die Befestigungseinrichtung mit einem über den Einschnitt hinaus erstreckenden Vorsprung versehen, der als zusätzlicher Anschlagsdämpfer dienen kann.

Damit der Einknüpfabschnitt an dem erfindungsgemäßen Kopplungsbauteil stark genug ausgelegt ist, kann in der Nähe des Einschnitts im elastischen Grundkörper eine Verstärkungseinlage vorgesehen sein. Diese Verstärkungseinlage ist vorzugsweise von dem den Grundkörper bildenden Material, wie Gummi oder Elastomer, vollständig umgeben.

Es soll klar sein, daß das erfindungsgemäße Bauteil zur Koppelung an die beiden Bauteile jeweils eine Befestigungseinrichtung der oben genannten Typen aufweisen kann. Insbesondere können kombinierte Befestigungseinrichtungen an jeweils einem Kopplungsbauteil vorgesehen sein. Das heißt, eine Kopplungseinrichtung mit einem Nietelement zur Befestigung des einen Bauteils und einem Einknüpfabschnitt zur Befestingung des anderen Bauteils oder eine Kombination aus einem Einknüpfabschnitt und einem Eingreifabschnitt sind mögliche Ausführungen des erfindungsgemäßen Kopplungsbauteils.

Ferner betrifft die Erfindung eine Anordnung mit zwei im Betrieb Schwingungen oder Vibrationen ausgesetzten Bauteilen insbesondere eines Kraftfahrzeugs. Die Anordnung ist gemäß der Erfindung mit einem oben dargestellten elastischen Kopplungsbauteil versehen, das die beiden Bauteile miteinander koppelt. Eine derartige erfindungsgemäße Anordnung ist in ihrer Gestaltung und ihres Zusammenbaus wesentlich flexibler als die herkömmlichen Anordnungen zweier im Betrieb Schwingungen oder Vibrationen ausgesetzter Bauteile.

In einer besonderen Ausführung ist eines der Bauteile ein Lenkradskelettteil und das andere Bauteil eine Tilgermasse, insbesondere ein Gasgenerator für ein Airbagmodul. Um die beiden Bauteile miteinander zu verbinden, kann ein Träger vorgesehen sein, wobei eines der beiden Bauteile starr mit dem Träger und das andere Bauteil über das mindestens eine Kopplungsbauteil federdämpfend und/oder tilgend verbunden ist. Durch das separate Kopplungsbauteil der Erfindung besteht eine hohe Flexibilität bei der Montage und konstruktiven Auslegung des Trägers sowie der zu koppelnden Bauteile. Außerdem wird durch das erfindungsgemäße Kopplungsbauteil die erfindungsgemäße Anordnung dadurch verbessert, daß die beiden Bauteile unmittelbar miteinander ohne Zwischenschaltung eines Trägers miteinander gekoppelt werden können. Durch die freie dimensionelle Gestaltbarkeit der Kopplungsbauteile können die Kopplungsbauteile und deren Anordnung sowie Positionierung frei bezüglich der Bauteile und/oder des Trägers bestimmt werden.

Damit die jeweilige Befestigungseinrichtung des erfindungsgemäßen Kopplungsbauteils mit dem jeweiligen zu koppelnden Bauteil zusammenwirken kann, sind die Bauteile entsprechend ausgelegt. Je nach eingesetzter Befestigungseinrichtung ist beispielsweise ein Bauteil mit einem Loch oder einer Bohrung für die Nietelement-Befestigungseinrichtung oder den Clipser, einem Klemmgreifer oder Schnapper für den Eingreifabschnitt oder einem männlichen Einknüpfabschnitt für den am Grundkörper angebrachten Einschnitt versehen.

Ferner betrifft die Erfindung einen Träger zum Halten eines Bauteils an einem im Betrieb Schwingungen und/oder Vibrationen ausgesetzten Bauteil insbesondere eines Kraftfahrzeugs. Bei den bekannten Trägern sind elastische Kopplungsteile an den Trägern anvulkanisiert. Dadurch besteht nur eine sehr geringe Flexibilität bei der Montage des Trägers mit den jeweiligen Bauteilen. Der erfindungsgemäße Träger ist mit Kopplungsbauteilen der erfindungsgemäßen Art versehen und gegebenenfalls vormontiert. Hierfür kann der Träger mit einem Loch oder einer Bohrung für eine Nietelement-Befestigungseinrichtung, einem Klemmgreifer, Clipser oder Schnapper für den Eingreifabschnitt des elastischen Grundkörpers und/oder mit einem männlichen Einknüpfabschnitt für den in dem Grundkörper ausgebildeten Einschnitt versehen sein. Diese konstruktive Maßnahmen an dem Träger der Erfindung wirken jeweils befestigend mit dem Kopplungsbauteil der Erfindung zusammen.

Insbesondere im Einsatz des erfindungsgemäßen Trägers bei einer Schwingungsanordnung bestehend aus einem Lenkradskelettteil und einer durch den Gasgenerator eines Airbagmoduls gebildeten Tilgermasse ist der erfindungsgemäße Träger mit einer im wesentlichen zentral liegenden Schußöfffiung versehen. Damit grundsätzlich keine Anvulkanisierungsmäßnahmen an dem Träger vorgenommen werden müssen, ist auch der zur Dichtung der Schußöffnung anzubringende elastische Ring an dem Umfang der Schußöffnung eingeknüpft. Auch der Gasgenerator kann an dem elastischen Ring nach dessen Positionierung einknüpfend verbunden werden.

Weitere Vorteile, Merkmale und Eigenschaften der Erfindung werden durch die folgende Beschreibung bevorzugter Ausführungen der Erfindung anhand der beiliegenden Zeichnungen deutlich, in denen zeigen:
Fig. 2 einen Längsschnitt des erfindungsgemäßen Kopplungsbauteils in einer ersten Ausführung;
Fig. 3 eine Längsschnittansicht des erfindungsgemäßen Bauteils in einer zweiten Ausführung;
Fig. 4 eine Längsschnittansicht des erfindungsgemäßen Bauteils in einer dritten Ausführung;
Fig. 5 eine Längsschnittansicht des erfindungsgemäßen Bauteils in einer vierten Ausführung; und
Fig. 6 eine Querschnittsansicht eines Kopplungsbauteils im eingebauten Zustand.

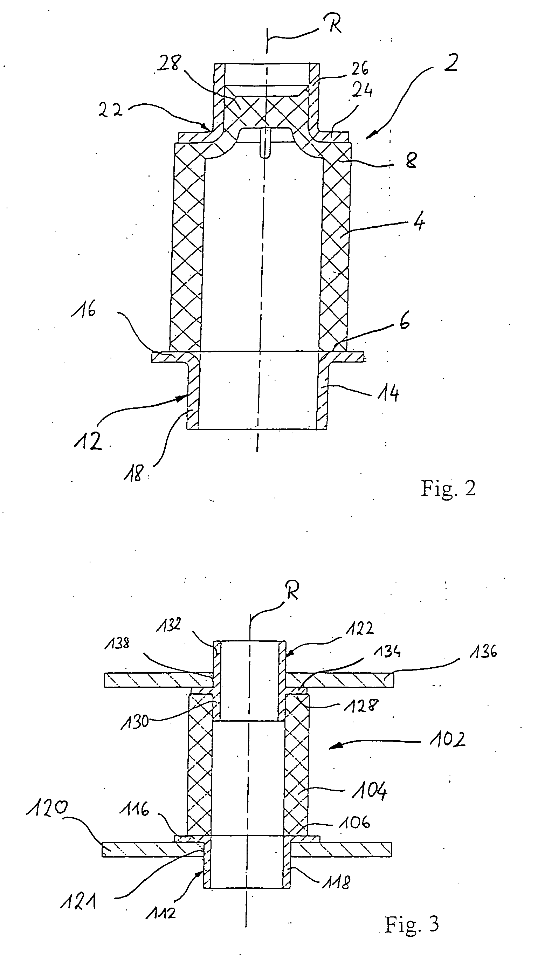

In Fig. 2 ist eine erste Ausführung des erfindungsgemäßen Kopplungsbauteils 2 dargestellt, das einen elastischen Grundkörper 4 umfaßt. Der elastische Grundkörper 4 ist aus einem Elastomer gebildet, dessen chemische Zusammensetzung derart gewählt ist, daß es Schwingungen und/oder Vibrationen, denen das Kopplungsbauteil 2 im Betrieb ausgesetzt ist, ertragen kann. Der Grundkörper 4 hat einen rotationssymmetrischen, hülsenartigen Aufbau 4 und erstreckt sich längs seiner Rotationsachse R. Die Wandstärke des Grundkörpers 4 bleibt ausgehend von dem in Fig. 2 unteren Ende 6 des Grundkörpers 4 bis zu einem oberen Abschnitt 8 konstant. An dem unteren Ende 6 des Grundkörpers 4 ist eine erste Befestigungseinrichtung 12 anvulkanisiert. Die Befestigungseinrichtung 12 ist als Nietelement zur Befestigung des Kopplungsbauteils 2 an einem im Betrieb Schwingungen und/oder Vibrationen ausgesetzten Fahrzeugbauteil ausgebildet, das in Fig. 2 nicht dargestellt ist.

Die Befestigungseinnrichtung 12 ist als im Querschnitt L-förmiges Hülsenbauteil 14 ausgestaltet, dessen kürzerer L-Schenkel 16 mit dem unteren Ende 6 des Grundkörpers 4 fest verbunden ist. Der lange L-Schenkel 18 erstreckt sich in Längsrichtung des hülsenartigen Grundkörpers 4. Der lange L-Schenkel 18 des hülsenartigen Bauteils 14 wird zur Befestigung des Kopplungsbauteils 2 an das zu koppelnde Kraftfahrzeugbauteil radial nach außen umgefalzt. Auf diese Weise wirkt das hülsenformige Bauteil 14 als Nietelement. Der Innendurchmesser des hülsenartigen Bauteils 14 entspricht dem Innendurchmesser des Grundkörpers 4 von dem unteren Ende 6 bis zum oberen Abschnitt 8.

Am oberen Abschnitt 8 des Grundkörpers 4 ist eine weitere als Nietelement ausgeführte Befestigungseinrichtung 22 für das Kopplungsbauteil 2 vorgesehen, die genauso wie die Befestigungseinrichtung 12 einen im Querschnitt L-förmigen hülsenartigen Aufbau besitzt. Der kurze L-Schenkel 24 dieses hülsenartigen Aulbaus ist quer zur Längsrichtung des elastischen Grundkörpers an letzterem anvulkanisiert, wobei der lange L-Schenkel sich in Längsrichtung von dem Grundkörper 4 weg erstreckt. Der Innendurchmesser des langen L-Schenkels 26 ist kleiner als der Innendurchmesser des langen L-Schenkels 18 der Befestigungseinrichtung 12 und des von dem unteren Ende 6 bis zum oberen Abschnitt 8 erstreckenden Teils des Grundkörpers 4. Das obere Ende 28 des Grundkörpers 4 kleidet teilweise die Innenfläche des hülsenartigen Aufbaus der Befestigungseinrichtung 22 aus und ist an dessen Form angepaßt. Das obere Ende 28 des Grundkörpers 4 ist geschlossen und verstärkt ausgebildet.

Der lange L-Schenkel 26 der Befestigungseinrichtung 22 erstreckt sich über das Ende 28 des Grundkörpers 4 hinaus, wobei der lange L-Schenkel 26 zur Koppelung an ein weiteres Kraftfahrzeugbauteil (nicht dargestellt) umgefalzt werden kann.

In Fig. 3 ist eine weitere Ausführung des erfindungsgemäßen Kopplungsbauteils 102 dargestellt, wobei ähnliche und identische Bauteile für die bessere Lesbarkeit der Figurenbeschreibung mit den gleichen Bezugszeichen versehen sind, die um 100 erhöht sind.

Das elastische Kopplungsbauteil 102 gemäß Fig. 3 umfaßt einen hülsenartigen Grundkörper 104, dessen Wandstärke über seine gesamte Länge konstant ist. Der Grundkörper 104 ist rotationssymmetrisch und erstreckt sich in einer zur Rotationsachse R parallelen Längsrichtung. An seinem unteren Ende 106 des Grundkörpers 104 ist die Befestigungseinrichtung 112 mit einem L-förmigen hülsenartigen Aufbau anvulkanisiert. Der Innendurchmesser des langen L-Schenkels 118 ist zu dem Innendurchmesser des hülsenförmigen Grundkörpers 104 identisch. Der kurze L-Schenkel 116 liegt mit einer Seite direkt an dem Grundkörper 104 an, wobei die vom Grundkörper 104 wegweisende Seite an einem Fahrzeugbauteil 120 anliegt. Das Fahrzeugbauteil 120 kann ein Teil des Lenkradskeletts sein.

Der im wesentliche konstante Außendurchmesser des langen L-Schenkels 118 ist geringfügig kleiner als ein Durchmesser einer in dem Kraftfahrzeugbauteil 120 eingebrachten Bohrung 121, so daβ der lange L-Schenkel 118 durch die Bohrung 121 durchführbar ist. Der durch die Bohrung 121 vorstehende Abschnitt des langen L-Schenkels 118 dient zur Vernietung mit dem Bauteil 120, indem der vorstehende Abschnitt umgefalzt wird.

Am oberen Ende 128 des Grundkörpers 104 ist die zweite Befestigungseinrichtung 122 fest mit dem Grundkörper 104 verbunden. Die Befestigungseinrichtung 122 weist einen hülsenförmigen Aufbau auf, wobei ein unterer Abschnitt 130 an der Innenfläche des Grundkörpers 104 anliegt und ein oberer Abschnitt 132 sich über den Grundkörper 104 hinaus erstreckt. Zwischen dem oberen und unteren Abschnitt 130, 132 ist im wesentlichen mittig ein radial nach außen stehender Steg 134 vorgesehen, der an einer Stirnseite des oberen Endes 128 des Grundkörpers 104 anliegt. Der Steg 134 ist einstückig mit dem unteren und oberen Abschnitt 130, 132 der Befestigungseinrichtung 122 ausgebildet. Der Steg 134 dient zudem als Anschlag oder Auflagefläche für das weitere Kraftfahrzeugbauteil 136.

Die Befestigungseinrichtung 122 umfaßt einen konstanten Innendurchmesser, der kleiner als der Innendurchmesser des Grundkörpers 104 ist. Der obere Abschnitt 132 der Befestigungseinrichtung 122 besitzt einen Außendurchmesser, der geringfügig kleiner als eine in dem Kraftfahrzeugbauteil 136 eingebrachte Bohrung 138 ist. Auf diese Weise wird der obere Abschnitt 132 der Befestigungseinrichtung 122 durch die Bohrung 138 zur Montage durchgeführt, wobei der über das Bauteil 136 vorstehende Bereich des oberen Abschnitts 132 zur Vemietung mit dem Kraftfahrzeugbauteil 136 umgefalzt werden kann.

Die in Fig. 3 dargestellte Ausführung des erfindungsgemäßen Kopplungsbauteils 102 reasliert eine Kopplung zweier im Betrieb Schwingungen und/oder Vibrationen ausgesetzter Kraftfahrzeugbauteile 120, 136, indem mechanische Befestigungseinrichtungen an dem Kopplungsbauteil zum Verbinden mit den jeweiligen Kraftfahrzeugbauteilen 120, 136 eingesetzt werden. Zur Montage notwendige Vulkanisierungsmaßnahmen sind mit den erfindungsgemäßen Kopplungsbauteilen 2, 102 nicht mehr notwendig.

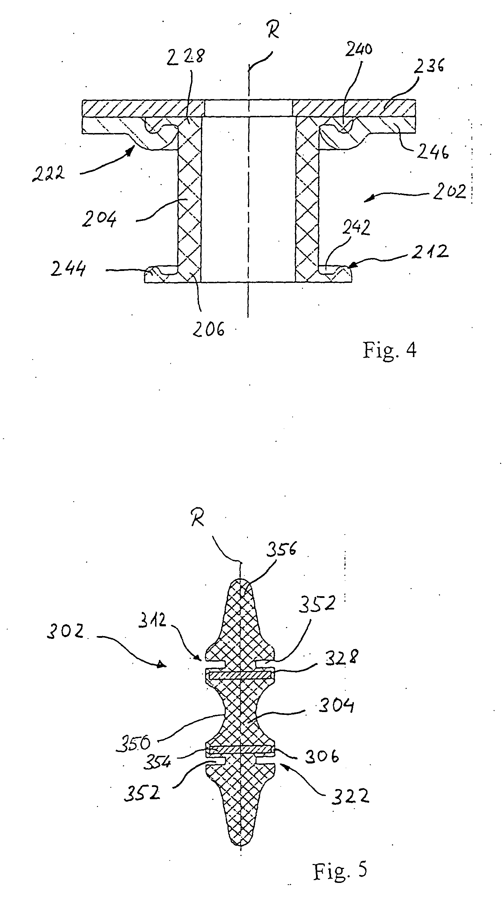

In Fig. 4 ist eine weitere Ausführung des erfindungsgemäßen Kopplungsbauteils dargestellt, wobei identische und ähnliche Bauteile aus Gründen der besseren Lesbarkeit der Figurenbeschreibung mit identischen Bezugsziffern versehen sind, die um 200 erhöht sind.

Das Kupplungsbauteil 202 gemäß Fig. 4 umfaßt einen Grundkörper 204, der einen im wesentlichen hülsenförmigen Aufbau hat. Die Wandstärke des Grundkörpers 204 ist vom oberen Ende 228 bis zum unteren Ende 206 im wesentlichen konstant. Sowohl am oberen Ende 228 als auch am unteren Ende 206 ist der Grundkörper mit einstückig geformten Eingreifabschnitten 240 versehen, die sich radial nach außen erstrecken und Teil der jeweiligen Befestigungseinrichtung 212, 222 bilden. Die Eingreifabschnitte 240 weisen einen ringförmigen Hinterschnitt 242 auf, der durch einen ringförmigen sich radial nach außen erstreckenden Wulst 244 gebildet ist.

Die durch den Eingreifabschnitt 240 gebildete Befestigungseinrichtung 212, 222 wirkt mit einem Klemmgreifer 246 oder ähnlichem, wie einem Schnapper, zusammen. In Fig. 4 ist ein derartiger Klemmgreifer 246 mit einem Eingriffabschnitt 240 zusammenwirkend am oberen Ende 228 des Grundkörpers 204 dargestellt. Der Klemmgreifer 246 ist mit dem zu befestigenden Kranfahrzeugbauteil 236 fest verbunden, wobei das dem Grundkörper 204 nahe Ende des Klemmgreifers 246 hakenförmig gebildet ist, um den Eingriffabschnitt 240 form- und kraftschlüssig zu greifen. Ein derartiger Klemmgreifer kann selbstverständlich auch am unteren Ende 206 des Grundkörpers 204 vorgesehen sein, was in Fig. 4 nicht dargestellt ist.

In Fig. 5 ist eine weitere bevorzugte Ausführung des erfindungsgemäßen Kopplungsbauteils dargestellt, wobei gleiche oder identische Bauteile zur besseren Lesbarkeit der Figurenbeschreibung mit den identischen Bezugsziffern versehen sind, die um 300 erhöht sind.

Das erfindungsgemäße Kopplungsbauteil 302 gemäß Fig. 5 besitzt einen elastischen Grundkörper 304 der als Vollkörperbauteil ausgebildet ist. Der Grundkörper 304 ist von seinem unteren Ende 306 bis zu seinem oberen Ende 328 mit einer Einschnürung 360 versehen, um kombinierte Zug- und Druckbeanspruchungen gut aushalten zu können. Sowohl am oberen Ende 328 als auch am unteren Ende 306 des Grundkörpers 304 ist zur Bildung der jeweiligen Befestigungseinrichtung 312, 322 ein radialer Einschnitt vorgesehen, in dem ein entsprechender Teil des Kraftfahrzeugbauteils (nicht dargestellt) einknüpfbar ist. Um den Einschnitt 352 zu verstärken, sind auf der dem jeweils gegenüberliegenden Einschnitt 352 zugewandten Seite eines Einschnitts eine Metalleinlage 354 vorgesehen. Die Metalleinlage 354 wird vollständig von dem den Grundkörper 304 bildenden Elastomermaterial umgeben.

Ferner erstreckt sich von der Einlage 354 und dem Einschnitt 352 in Längsrichtung des Grundkörpers 304 ein wulstartiger Vorsprung 356. Der wulstartige Vorsprung 356 dient dazu, übermäßiges Dehnen des Grundkörpers 304 bzw. des Kopplungsbauteils 302 zu vermeiden. Hierfür sind Anschlagsbauteile an dem jeweils zu koppelnden Kraftfahrzeugbauteil (nicht dargestellt) vorgesehen, die mit dem Vorsprung 356 bei übermäßigem Dehnen des Kopplungsbauteils 302 zusammenwirken.

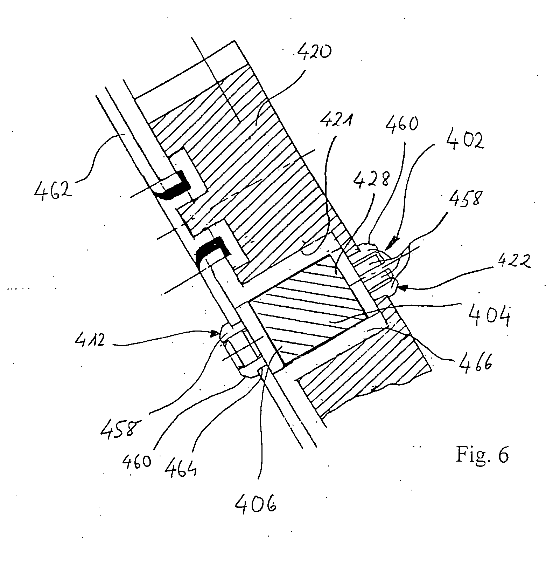

In Fig. 6 ist eine weitere Ausführung des erfindungsgemäßen Kopplungsbauteils dargestellt, wobei identische und ähnliche Bauteile aus Gründen der besseren Lesbarkeit der Figurenbeschreibung mit identischen Bezugszeichen versehen sind, die um 400 erhöht sind.

Das erfindungsgemäße Kopplungsbauteil 402 gemäß Fig. 6 hat einen Grundkörper 404, der aus einem Elastomermaterial gebildet ist. Sowohl an dem unteren Ende 406 als auch am oberen Ende 428 ist jeweils eine Befestigungseinrichtung 412 vorgesehen, die mit dem Grundkörper 404 fest verbunden ist. Der elastische Grundkörper 404 ist in der Ausführung nach Fig. 6 als Vollkörper ausgebildet.

Die Befestigungseinrichtungen 412 sind als Kunststoffclipse mit mehreren sich in Längsrichtung des Kopplungsbauteils 402 erstreckenden Klemmhaken 458 ausgebildet. Im eingebauten Zustand sind die Klemmhaken 458 durch eine im Kraftfahrzeugbauteil eingebrachte Bohrung geführt und besitzen an ihren Enden Anschlagflächen 460, die ein Zusammendrücken der Haken 458 beim Einschieben bewirken. Die Bohrung des Kraftfahrzeugbauteils ist geringfügig kleiner als der dem Grundkörper 404 naheliegende Bereich der Haken 458.

In Fig. 6 stellt das Kraftfahrzeugbauteil eine Tilgermasse 420 mit einer Bohrung 421 dar, in der das Kopplungsbauteil 402 größtenteils von der Tilgermasse 420 umgebend untergebracht ist. Die Tilgermasse 420 ist über das erfindungsgemäße Kopplungsbauteil 402 mit einem Trägerblech 462 verbunden, das ebenfalls eine Bohrung 464 aufweist, die der Bohrung 421 der Tilgermasse 420 diametral gegenüberliegt. Der Durchmesser der Bohrung 464 ist geringfügig kleiner als der dem Grundkörper naheliegende Bereich der Haken 458 ausgeführt, damit ein Verklemmen der Befestigungseinrichtung 412 mit dem Trägerblech 462 realisiert ist.

Die als Kunststoffclip ausgeführte Befestigungseinrichtung 412 kann aus jedem beliebigen Kunststoffmaterial bestehen, das eine ausreichende Festigkeit aufweist, um die auf das Kopplungsbauteil 402 sowie auf das Trägerblech 462 und die Tilgermasse 420 wirkende Schwingungslast zu ertragen.

Die Bohrung 421 in der Tilgermasse 420 hat einen ersten Abschnitt mit einem großen Durchmesser, der sich größtenteils durch die Tilgermasse hindurch erstreckt, und einen zweiten Abschnitt mit einem kleineren Durchmesser, der zur Verrastung der Klemmhaken 458 dient. Am ersten Abschnitt ist ein Freiraum 466 zwischen dem Kopplungsbauteil 402 und der Tilgermasse 420 vorgesehen.

Der Grundkörper 4, 104, 204, 304, 404 ist vorzugsweise in allen vier bevorzugten Ausführungen aus einem Elastomermaterial gebildet, wobei die als Nietelemente gebildeten Befestigungseinrichtungen 12, 22, 112, 122 und die Einlage 354 der Einknüpfbefestigungseinrichtung gemäß Fig. 5 aus Metall, insbesondere Aluminium, gebildet sind.

Die in der obigen Beschreibung, den Figuren und den Ansprüchen offenbarten Merkmale können sowohl einzeln als auch in beliebiger Kombination für die Verwirklichung der Erfindung von Bedeutung sein.

### Bezugszeichenliste

- 2, 102, 202, 302, 402: Kopplungsbauteil
- 4, 104, 204, 304, 404: Grundkörper
- 6, 106, 206, 306, 406: unteres Ende von 4
- 8: oberer Abschnitt von 4
- 12, 112, 212, 312, 412: Befestigungseinrichtung
- 14: hülsenförmiges Bauteil
- 16: kurzer L-Schenkel
- 18: langer L-Schenkel
- 22, 122, 222, 322: Befestigungseinrichtung
- 24: kurzer L-Schenkel
- 26: langer L-Schenkel
- 28, 128, 228, 328, 428: oberes Ende von 4

- 120, 420: Kraftfahrzeugbauteil
- 121, 421: Bohrung

- 130: unterer Abschnitt von 122
- 132: oberer Abschnitt von 122
- 134: Steg .
- 136: Kraftfahrzeugbauteil
- 138: Bohrung
- 240: Eingreifabschnitt
- 242: Hinterschnitt
- 244: Wulst

- 350: Einschnürung
- 352: Einschnitt
- 354: Einlage
- 356: Vorsprung

- 458: Haken
- 460: Anschlagflächen
- 462: Trägerblech
- 464: Bohrung
- 466: Freiraum

- R: Rotationsachse

## Patentansprüche

1. Elastisches Kopplungsbauteil zum Verbinden zweier im Betrieb Schwingungen und/oder Vibrationen ausgesetzter Bauteile (120, 136, 236, 420, 462) insbesondere eines Kraftfahrzeugs, vorzugsweise zum Verbinden eines Lenkradskelettteils und eines Massetilgers, wobei das Kopplungsbauteil (2, 102, 202, 302, 402) einen elastischen Grundkörper (4, 104, 204, 304, 404) und eine jeweils einem Bauteil zuzuordnende mechanische Befestigungseinrichtung (12, 22, 112, 122, 212, 222, 312, 322, 412, 422) umfaßt, die mit dem Grundkörper (4, 104, 204, 304, 404) fest verbunden ist.

2. Kopplungsbauteil nach Anspruch 1, bei dem die Befestigungseinrichtung (12, 22, 112, 122, 212, 222, 312, 322, 412, 422) zum lösbaren Befestigen des Kopplungsbauteils an die Bauteile ausgelegt ist.

3. Kopplungsbauteil nach Anspruch 1 oder 2, bei dem die Befestigungseinrichtung (12, 22, 112, 122, 212, 222, 312, 322, 412, 422) dazu ausgelegt ist, einen Formschluß und/oder einen Reib- oder Kraftschluß mit dem jeweiligen Bauteil (120, 136, 236, 420, 462) zu bilden.

4. Kopplungsbauteil nach einem der Ansprüche 1 bis 3, bei dem die Befestigungseinrichtung (12, 22, 112_{,} 122, 212, 222, 412, 422) an wenigstens einem freien Ende (6, 28, 106, 128, 206, 228, 406, 428) des Kopplungsbauteils (2, 102, 202, 402) vorgesehen ist.

5. Kopplungsbauteil nach einem der Ansprüche 1 bis 4, bei dem die Befestigungseinrichtung (12, 22, 112, 122, 412, 422) durch ein Nietelement oder ein Verclipselement gebildet ist.

6. Kopplungsbauteil nach Anspruch 5, bei dem das Niet- oder Verclipselement an dem elastischen Grundkörper (4, 104, 404) angeklebt oder anvulkanisiert ist.

7. Kopplungsbauteil nach Anspruch 5 oder 6, bei dem das Niet- oder Verclipselement aus einem Metall, insbesondere Aluminium, ist.

8. Kopplungsbauteil nach einem der Ansprüche 1 bis 7, bei dem die Befestigungseinrichtung (212, 222) durch einen Eingreifabschnitt (240) am Grundkörper (204) gebildet ist, mit dem ein Klemmgreifer (246) oder Schnapper eines der Bauteile (236) zusammenwirken kann.

9. Kopplungsbauteil nach Anspruch 8, bei dem der Eingreifabschnitt (240) einstückig mit dem Grundkörper (204) gebildet ist.

10. Kopplungsbauteil nach einem der Ansprüche 1 bis 9, bei dem der Grundkörper (4, 104, 204) einen hülsenartigen Aufbau aufweist.

11. Kopplungsbauteil nach einem der Ansprüche 1 bis 9, bei dem ein massiver elastischer Grundkörper (304, 404) vorgesehen ist.

12. Kopplungsbauteil nach Anspruch 11 oder nach einem der Ansprüche 1 bis 10, bei dem die Befestigungseinrichtung (312, 322) durch einen in dem Grundkörper.(304) eingebrachten Einschnitt (354) gebildet ist, in dem das jeweilige Bauteil einknüpfbar ist.

13. Kopplungsbauteil nach Anspruch 12, bei dem der Grundkörper (304) benachbart dem Einschnitt (352) eine Verstärkungseinlage (354) aufweist, die insbesondere von dem den Grundkörper (304) bildenden Material vollständig umschlossen ist.

14. Kopplungsbauteil nach einem der Ansprüche 1 bis 13, bei dem der Grundkörper (304) einen sich über die Befestigungseinrichtung (312, 322) hinaus erstreckenden elastischen Vorsprung (356) aufweist.

15. Kopplungsbauteil nach Anspruch 14, bei dem der Grundkörper (304) und der Vorsprung (356) einstückig ausgebildet, insbesondere gespritzt, sind.

16. Kopplungsbauteil nach einem der Ansprüche 1 bis 15, bei dem der Grundkörper (4, 104, 204, 304) aus Gummi, insbesondere aus einem Elastomer, gebildet ist.

17. Anordnung mit zwei im Betrieb Schwingungen und/oder Vibrationen ausgesetzten Bauteilen insbesondere eines Kraftfahrzeugs und mindestens einem nach einem der Ansprüche 1 bis 16 gebildeten, elastischen Kopplungsbauteil (2, 102, 202, 302, 402), das die zwei Bauteile (120, 136, 236, 420, 462) miteinander koppelt.

18. Anordnung nach Anspruch 17, bei der das eine Bauteil ein Lenkradskelettteil und das andere Bauteil eine Tilgermasse (420), insbesondere ein Gasgenerator für ein Airbagmodul, sind.

19. Anordnung nach Anspruch 17 oder 18, bei der zwischen den Bauteilen ein Träger vorgesehen ist, wobei eines der Bauteile mit dem Träger starr und das andere Bauteil mit dem Träger über das mindestens eine Kopplungsbauteil (2, 102, 202, 302, 402) oder beide Bauteile mit dem Träger über das mindestens eine Kopplungsbauteil (2, 102, 202, 302, 402) verbunden sind.

20. Anordnung nach Anspruch 17 oder 18, bei welcher die beiden Bauteile über das mindestens eine Kopplungsbauteil (2, 102, 202, 302, 402) ohne Zwischenschaltung eines Trägers unmittelbar miteinander verbunden sind.

21. Anordnung nach Anspruch 20, bei der die Bauteile dazu ausgelegt sind, mit der jeweiligen Befestigungseinrichtung (12, 22, 112, 122, 212, 222, 312, 322, 412, 422) mechanisch koppelnd zusammenzuwirken.

22. Anordnung nach einem der Ansprüche 16 bis 20, bei der wenigstens ein Bauteil zumindest ein Loch (121, 138, 464), einen Klemmgreifer (246) oder Schnapper und/oder einen männlichen Einknüpfabschnitt aufweist, welche mit der jeweiligen Befestigungseinrichtung (12, 22, 112, 122, 212, 222, 312, 322, 412, 422) des Kopplungsbauteils (2, 102, 202, 302, 402) zusammenwirken.

23. Träger zum Halten eines Bauteils an einem im Betrieb Schwingungen und/oder Vibrationen ausgesetzten Bauteil insbesondere eines Kraftfahrzeugs, wobei an dem Träger mindestens ein nach einem der Ansprüche 1 bis 16 ausgebildetes Kopplungsbauteil (2, 102, 202, 302, 402) durch dessen Befestigungseinrichtung (12, 22, 112, 122, 212, 222, 312, 322, 412, 422) fest montiert ist.

24. Träger nach Anspruch 23, bei dem wenigstens ein Bauteil zumindest ein Loch, (121, 138) einen Klemmgreifer (246) oder Schnapper und/oder einen männlichen Einknüpfabschnitt aufweist, welche mit der jeweiligen Befestigungseinrichtung (12, 22, 112, 122, 212, 222, 312, 322, 412, 422) des Kopplungsbauteils (2, 102, 202, 302, 402) zusammenwirken.

25. Träger nach Anspruch 23 oder 24, der eine Schußöffnung für den Gasgenerator aufweist, wobei ein elastischer Ring am Schußöffnungsumfang eingeknüpft ist.
